# EUROPEAN PATENT APPLICATION

(11) **EP 4 040 732 A1**
(43) Date of publication of application: **10.08.2022**
(21) Application number: 21155433.2
(22) Date of filing: 05.02.2021
(51) Int. Cl.: H04L 12/24, H04W 72/12

(54) **GRAPH NEURAL NETWORK FOR TIME SENSITIVE NETWORKING IN INDUSTRIAL NETWORKS**

(71) Applicant: Siemens Aktiengesellschaft, 80333 München (DE)
(72) Inventor: The designation of the inventor has not yet been filed

(57) **Abstract**

The invention discloses a computer implemented method for decreasing the configuration search space explored by the schedule computation algorithm of TSN in an industrial network, comprising following steps:
a) providing a Graph Neural Network with the same topology as the industrial network, whereby the nodes (11) of the Graph Neural Network are bridges (2), transmitters (1) and receivers (3) of the industrial network and edges (12) of the Graph Neural Network are links (4) between bridges (2), transmitters (1) and receivers (3), whereby the Graph Neural Network is trained according to pre-defined TSN stream requirements feasible paths through the industrial network, and
b) by the Graph Neural Network predicting a probability of according to the TSN stream requirements feasibility of a candidate path (13) for a target stream (6) embedding on the candidate path (13), according to the TSN stream requirements, whereby the candidate path (13) corresponds to a subset of potential bridges (2) and links (4) in the industrial network.

A related computational device and a related computer program product are disclosed as well.

## Description

### FIELD OF THE INVENTION

The present invention relates to a computer-implemented method for decreasing the configuration search space explored by the schedule computation algorithm of TSN in a TDMA network. The present invention further relates to computational device performing such method and a computer program product and storage medium for carrying out such method.

### BACKGROUND OF THE INVENTION

Time Sensitive Networking (TSN) is a set of IEEE 802.1 standards that extend the existing Ethernet capabilities to enable delay- and jitter-bounded, bandwidth-provisioning or resilient communication for targeted industrial and audio/video applications. With its distributed resource reservation protocols, TSN also addresses dynamic Industry 4.0 use cases requiring runtime establishment of communication streams among multiple communication peers. Thus, multiple applications can specify their communication requirements at runtime, get the appropriate resources provisioned by the TSN control plane, and eventually use and share the network resources without impacting other TSN applications' communication invariants on bandwidth, delay, resilience or jitter.

However, efficient runtime establishment of TSN streams is feasible only if the response time required by the TSN control plane to compute the appropriate configurations is sufficiently short. Thus, for example, IEC/IEEE 60802 Use Case Document v1.3 states maximum response time requirements of < 500 ms for stream computation and deployment for the use case of exchangeable work piece equipment in factory automation networks.

Prior works in the area rely on analytic methods that require time-intensive verification of schedule proposals to guarantee the validity of the proposed schedule [RSOliver2018, Ansah2019]. Due to the related time-intensity in schedule verification, all proposed models tackle very trivial topologies, i.e., lines comprising 2-5 switches [Navet2019, RSOliver2018, Ansah2019].

The closest prior art is [Navet2019] which tackles the problem of complex scheduling by means of k-NN and k-Means classifiers, trained on a line topology comprising two switches. The authors rely on evaluation of a schedule that involves knowledge of stream specifications and topology specification and considers the five features to deduce a configuration as (in)feasible: the number of critical / audio / video flows (3 classes) requiring embedding, the maximum load of the network and the Gini index of the loads of the links. Thus, the trained model is applicable only for the network topology and the three classes it was trained for. Compared to this work, we allow for a completely arbitrary stream specification that does not need to be grouped to a limited number of stream classes (i.e., three in [Navet2019]), and a generalized topology definition due to reliance on a generalizable learning approach (based on Graph Neural Networks). The training procedure differs as well, due to possibility to update the model at runtime after each path / schedule verification, both for feasible and infeasible embeddings.

### SUMMARY OF THE INVENTION

An objective of the present invention is to provide a solution for reducing TSN configuration computation effort in industrial networks. A further objective is to support TSN validation.

To accomplish the objective, the present invention provides a solution according to the independent claims. Advantageous embodiments are provided in the dependent claims.

According to an aspect the invention addresses the issue of slow convergence time of optimal and heuristics-based algorithms used in computation of transmission schedules in TSNs. Computing the Gate Control Lists (GCLs) for example in a TDMA-based TSN relying on 802.1Qbv Time Aware Shaper (TAS), is a complex task requiring a lengthy search space exploration to identify valid candidate configurations. The problem of lengthy computation is further exacerbated in network topologies with non-trivial inter-connections, i.e., in meshed networks and arbitrary combinations of rings, line, star and grid sub-topologies. The complexity issue is not limited to L2 TSN and is transferable to inter-cell and Layer 3 TSN where backbone TSN network may comprise complex topology structures which must be considered in schedule computation.

Multiple TSN streams may require transmission over the same link (i.e., a shared physical resource). Verification of a TAS schedule that omits queuing to allow for lowest-possible transmission latencies requires identification of potential overlapping stream frame arrivals on each port of the path partaken by a stream. This is a lengthy analysis that results in per-stream *O*(|*Psᵢ*| ^{∗} |*Pₙ*| ^{∗} |*l*|) computational complexity to identify a suitable transmission path for each stream *sᵢ* ∈ *S*, where *S* is the set of streams requiring embedding, *Psᵢ* is the set of candidate paths for *sᵢ*, *Pₙ* is the set of transmission ports (links) on the path, and |*l*| is the number of transmission slots of the transmission schedule requiring conflict evaluation.

As a first step to reduce complexity, we define transmission slots instead of computing the schedule on a 1 nanosecond or even shorter time base. The length of the transmission slot is computed based on the packet transmission times and cycle times of all streams to be embedded. As a first approximation, the greatest common divisor of all packet transmission and cycle times can be used. Because a smaller number of longer transmission slots significantly reduces the complexity of computation, certain optimizations, e.g. rounding up of similar time values, should be considered, even if this comes to the price of a certain waste of reservable resources. Given the combinatory nature of possible path and transmission slot combinations, identifying suitable solutions for many streams is a highly time-consuming process. Verifying a single configuration of 500 streams with three priority levels using "RealTime@Work (RTaW)'s commercial scheduler" lasts on average around 470 ms of schedule evaluation time *per configuration* sample, resulting in 131 hours for validating 10^6 candidate schedules [Navet2019]. Note that this is only the time spent validating a configuration, proposing a configuration adds additional time penalty.

The approach of acceleration of the schedule computation is an aspect of the invention in the context of an arbitrarily connected TSN with implemented Time Aware Shaper (TAS) proposed in IEEE 802.1Qbv, meanwhile integrated into 802.1Q-2018 as "Enhancements for Scheduled Traffic", to enforce TDMA-based separation of transmission slots for multiplexed TSN streams transmitted over a single port. Using TAS, multiple streams can share the same physical substrate, with TAS governing the transmissions of traffic assigned to different queues. A TAS schedule (i.e., the Gate-Control-List) governs the assignment of transmission slots at per transmission queue granularity. Thus, TSN streams can be assigned to different queues, and opening-and-closing times of the individual queues can be managed by the per-port GCL configuration.

By smart configuration of a GCL in each network end point and network bridge, isolation and fairness properties can theoretically be met for each stream. By guaranteeing an isolated transmission slot for each frame of a stream - on each bridge on the computed path assigned for the stream, worst-case latency and jitter guarantees can be given for well-behaved streams. 'Well-behaved' denotes a stream whose packets are generated and fed into the network with consideration of the time-to-send for each stream frame.

Thus, using a proper scheduler design, a transmission time can be computed for frames of a time-sensitive stream so that no impactful contention and queueing effects occur on any links of the path partaken by the time-sensitive traffic. The transmission time is represented as a transmission offset with the reference time point presented by the start of the global network cycle. To ensure a global network cycle, TSN end points and bridges synchronize by means of a Time Synchronization Protocol, e.g. the IEEE 802.1AS-2020 protocol.

In the following a synchronized network and end-stations, as well as TAS-enabled bridges, are assumed. However, the proposed approach can be generalized to alternative TSN configurations relying on other forms of scheduling / shaping (CBS, Strict Priority etc.), though, so far, we have executed the proof-of-concept validations only for the TAS.

The general approach proposed by the invention is as follows. We rely on a generalized neural network approach to assist the TSN configuration computation and validation. Given the feasibility prediction of the trained neural network(s), we decrease the configuration search space that must be explored by the schedule computation algorithm.

Concretely, in the case of TAS-based TSNs, the lengthy analysis of the complete search space (i.e., evaluation of each possible path and transmission offset combination) is expedited by leveraging the information on: a) past successes of stream embeddings given stream specification and past occupation of transmission slots on evaluated transmission paths; and b) the present information on occupation of transmission slots on candidate paths, as well as the stream requirements. We use the collected knowledge of successful and unsuccessful embeddings to train a Graph Neural Network (GNN) model capable of filtering out paths prior to evaluation of possible conflicts on the path.

We rely on GNNs operating on graph topology structures and per port real-time features used to summarize per-port information (including currently imposed load, fragmentation of slot assignments etc.) and propagate the information along the nodes of the graph in a number of message passing steps. After a finite number of propagation steps, each node in the graph is associated with a descriptive feature vector. Following the propagation, a trained global function then takes as input the stream requirements and per-node + per-edge feature vectors and subsequently outputs the global label denoting the feasibility of the embedding, i.e., to predict if the embedding on the target path is feasible or not.

In the case of an affirmative result, the TSN scheduler proceeds to evaluate the candidate path for schedule conflicts as per the usual procedure. In the case of a negative prediction, the TSN scheduler skips the candidate path and instead processes another candidate path from the set of affirmative paths.

Thus, the schedule proposal and schedule validation step are accelerated by means of skipping the paths predicted infeasible. Note that alternative variations of schedule search space decrease, i.e., by skipping evaluation for a particular stream altogether is equally reasonable, albeit not validated by our implementation.

In a proof-of-concept parametrization with random topologies comprising 10-12 switches with link probability of 0.35 between any two switches, 6 end stations, varied TSN stream specifications, we were able to speed up the rejections of infeasible configurations by 40-70% compared to an iterative schedule validation that closely resembles [Ansah2019, Pahlevan2018, Hellmanns2020]. The variance in performance increase is related to the variety of evaluated topologies, stream specifications and neural network hyper-parameters that, in addition to inference speed, also impact the accuracy of the predictions.

We were able to train the network to accurately label 96% of inputs correctly using two-layer, 12-perceptron (per-layer) Multi-Layer Perceptron networks.

### A) Details of the GNN model generation and handling:

Apart from multiple MLPs, we rely on the abstraction of graph neural networks (GNNs) to realize the prediction step. GNNs are a class of functions for relational reasoning over graph-structured representations. We specifically rely on a Message Passing GNN [Battaglia2018] where link and node attributes are updated over multiple message-passing iterations, resulting in a graph representation with iteratively updated graph attributes but unchanged topology structure. During each message passing step, a trainable global update function takes as input the node and edge attributes to output the feasibility predictions.

Contrary to prior art that leverage an analytic solution in proposal and evaluation of TSN configurations, the inventive approach relies on collection of past information so to generate a Graph Neural Network (GNN) model allowing for prediction of feasibility of a candidate path for a successful stream embedding on the given path. Candidate paths predicted infeasible are skipped in the configuration evaluation. This results in a significant efficiency gain (see below) in the schedule proposal & evaluation procedure due to omitting the configuration proposal & evaluation procedure for every candidate path for a stream embedding.

A Graph Neural Networks - based design, capable of accelerating the configuration search space exploration in TSNs can be implemented in beneficial ways.
∘ Using the GNN for pre-evaluation whether specific paths could be early excluded from evaluation for a target stream, as they are predicted to not fit the requested schedule,
∘ Using the GNN approach for pre-evaluation whether specific streams can be early rejected during schedule computation as they are predicted not to fit on any of the paths in the system,
∘ Using the GNN approach to learn from samples generated in simulated and non-simulated simple and complex topologies, with the resulting models generalizable to unseen topologies, including multi-ring and meshed networks,
∘ Use of the threshold-based metric to govern the decision to evaluate the candidate path,
∘ Use of the threshold-based metric to govern the parametrization of the inference phase (i.e., the number of message-passing phases) executed to compute the feasibility labels,
∘ Use of the GNN approach to significantly reduce the time of feasibility check for packet transmission schedule calculation; complex networks schedule calculation with bounded response time requirement can be enabled by this approach (expected not be solvable in a feasible amount of time using analytic methods - see timing example mentioned in 1.).

A GNN-aware TSN scheduler can be used in different wa<ys as follows:
∘ A heuristics-based or optimal scheduler to label the paths with feasibility labels used to train the GNN models.
∘ Semi-supervised path labeling of training samples, based on automated schedule generation for a randomly generated list of stream-requirements;
∘ TSN schedule computation that incorporates the feasibility check based on GNN output as a precondition to the sub-processes of schedule computation and schedule validation.

Implementation of the GNN-aware scheduler and GNN-based search space minimization design as follows:
∘ As a switch component with LRP/RAP or any other distributed reservation interface to propagate the resulting schedule outputs in TSN bridges on the computed path;

As a centralized component with NETCONF/YANG / CLI-based or any other configuration interface to configure the resulting schedule outputs in TSN bridges.

The invention claims a computer implemented method for decreasing the configuration search space explored by the schedule computation algorithm of TSN in an industrial network, comprising following steps:
a) providing a Graph Neural Network with the same topology as the industrial network, whereby the nodes of the Graph Neural Network are bridges, transmitters and receivers of the industrial network and edges of the Graph Neural Network are links between bridges, transmitters and receivers, whereby the Graph Neural Network is trained according to pre-defined TSN stream requirements feasible paths through the industrial network, and
b) by the Graph Neural Network predicting a probability of according to the TSN stream requirements feasibility of a candidate path for a target stream embedding on the candidate path, according to the TSN stream requirements, whereby the candidate path corresponds to a subset of potential bridges and links in the industrial network.

An example for an industrial network is a TDMA network. Bridges include switches and routers.

An advantage of the invention is that TSN configuration computation effort in industrial networks is significantly reduced. A further benefit of the invention is that a TSN validation is effectively supported.

In a further embodiment the method comprises:
c) if the probability is lower than a predetermined threshold, excluding the candidate path from evaluation by the industrial network for the target stream, as candidate path is predicted to not fit the requested TSN stream requirements.

In a further embodiment the method comprises:
d) rejecting the target stream, if the target stream is predicted not to fit on any path through the industrial network.

In a further embodiment the Graph Neural Network is trained by samples generated in simulated and non-simulated topologies, with a resulting Graph Neural Network model generalizable to unseen topologies, including multi-ring and meshed networks.

In a further embodiment a trainable edge update function takes as input the current state of its edge attributes, the state of aggregated node attributes for nodes incident to this edge, and current state of global attributes, updating the edge attributes in each iteration step.

In a further embodiment a trainable node update function takes as input the current state of its node attributes, the state of aggregated edge attributes for all edges incident to this node, and current state of the global attributes, updating the node attributes in each iteration step.

In a further embodiment a trainable node-specific aggregation function aggregates the attributes of edges incident to a node.

In a further embodiment a trainable edge and node aggregation function aggregates the current state of all edges' attributes in the graph of the Graph Neural Network, and the current state of all nodes' attributes in the graph, respectively.

In a further embodiment a trainable global update function takes as input the current state of the global attributes, and the aggregated state of all nodes and all edges in the graph outputting updated global attributes in each iteration step.

The invention claims further a computational device designed to perform an inventive method.

A further embodiment comprises a trainable edge update function, designed and programmed taking as input the current state of its edge attributes, the state of aggregated node attributes for nodes incident to this edge, and current state of global attributes, to update the edge attributes in each iteration step

A further embodiment comprises a trainable node update function, designed and programmed taking as input the current state of its node attributes, the state of aggregated edge attributes for all edges incident to this node, and current state of the global attributes, to update the node attributes in each iteration step.

A further embodiment comprises a trainable node-specific aggregation function, designed and programmed to aggregate the attributes of edges incident to a node.

A further embodiment comprises a trainable edge and node aggregation function, designed and programmed to aggregate the current state of all edges' attributes in the graph of the GNN, and the current state of all nodes' attributes in the graph, respectively,
and a trainable global update function, designed and programmed to take as input the current state of the global attributes, and the aggregated state of all nodes and all edges in the graph outputting updated global attributes in each iteration step.

The invention further claims a computer program product comprising instructions which, when the program is executed by a computational device, cause the computational device to carry out the steps of the inventive method.

Further benefits and advantages of the present invention will become apparent after a careful reading of the detailed description with appropriate reference to the accompanying drawings.

### BRIEF DESCRIPTION OF THE DRAWINGS

- FIG. 1: shows a schematic diagram of a TDMA network,
- FIG. 2: shows a schematic diagram of a Graph Neural Network,
- FIG. 3: shows a flow chart of the method and
- FIG. 4: shows a block diagram of the computational device

### DETAILED DESCRIPTION OF THE INVENTION

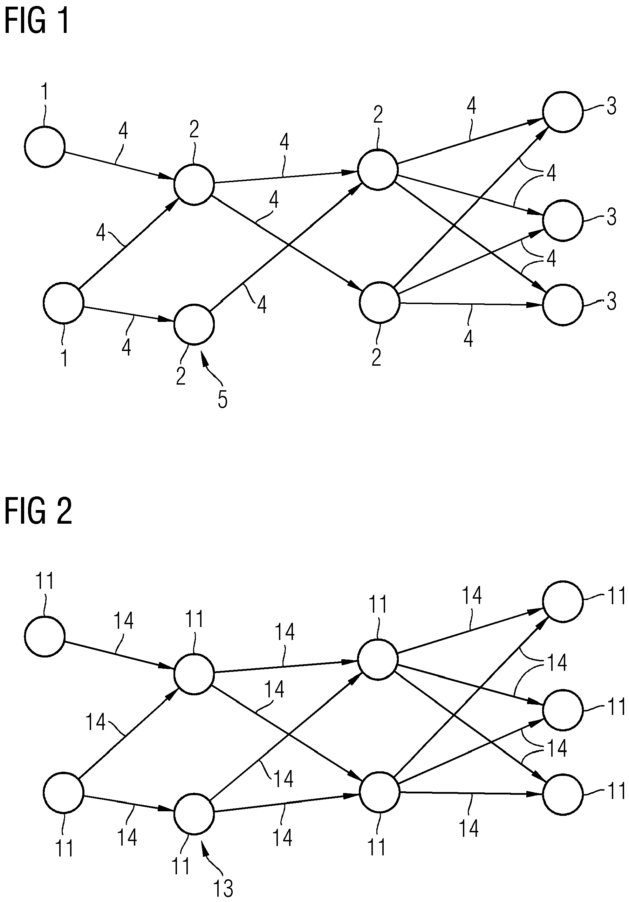

FIG. 1 shows a schematic diagram of an embodiment of the industrial network designed as a TDMA network for TSN. The TDMA network comprises transmitters 1, bridges 2 and receivers 3. Transmitters1, receivers 3 and bridges 2 are connected via links 4. A feasible subset 4 of bridges 2 and links 4 calculated by a corresponding Graph Neural Network (see FIG. 2) according to the invention is shown by the bold line.

FIG. 2 shows a schematic diagram of the representation of the TDMA network by a Graph Neural network according to the invention. Nodes 11 corresponds to receivers 3, bridges 2 and transmitters 1 whereas edges 14 corresponds to links 4. A feasible candidate path 13 calculated by the new method is shown by the bold line.

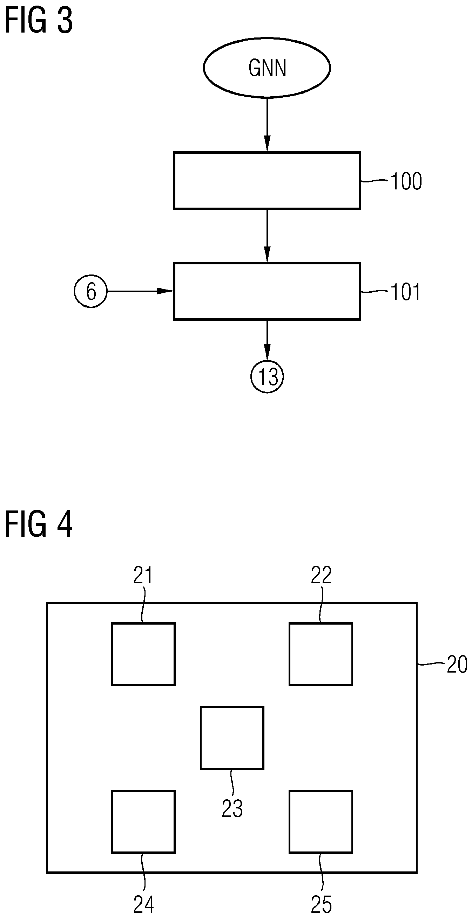

FIG. 3 shows a basic flow chart of the computer-implemented method according to the invention. The method is aimed for reducing the configuration search space explored by the schedule computation algorithm of TSN in a TDMA network. In step 100 a Graph Neural Network with the same topology as the TDMA network is provided. Nodes of the Graph Neural Network are bridges, transmitters, and receivers of the TDMA network and edges of the Graph Neural Network (GNN) are links between bridges, transmitters, and receivers. The Graph Neural Network has been trained by according to pre-defined TSN stream requirements feasible paths through the TDMA network. In step 101 the Graph Neural Network predicting a probability 14 of according to the TSN stream requirements feasibility of a candidate path for a target stream 6 embedding on the candidate path 13, according to the TSN stream requirements, whereby the candidate path 13 corresponds to a subset of potential bridges and links in the TDMA network.

Subsequently, the main aspects of the computer-implemented method are described for an embodiment of the invention according to FIG. 4. FIG. 4 shows a block diagram of the computational device 20 executing the method according to FIG. 3.

The training of the GNN - in more detail - is done as follows. In each message passing step:
1) A trainable edge update function 21 takes as input the current state of its edge attributes, the state of the aggregated node attributes for nodes incident to this edge (ref. Step 4), as well as the current state of the global attributes (ref. Step 5) in order to update the edge attributes in each iteration.
2) A trainable node update function 22, on the other hand, takes as the input the current state of its node attributes, the aggregated state of edge attributes for all edges incident to this node (ref. Step 3), as well as the current state of the global attributes (ref. Step 5), in order to update the node attributes in each iteration.
3) A node-specific aggregation function 23 is used to aggregate the attributes of edges incident to a node. In our proof-of-concept evaluation we rely on TensorFlow's segment sum function to aggregate the adjacent edge attributes.
4) An edge and node aggregation function 24 is used to aggregate the current status of *all* edges' attributes in the graph, and the current status of *all* nodes' attributes in the graph, respectively. We, again, rely on the segment sum function to aggregate the edges and nodes attributes.
5) A trainable global update function 25 then takes as the input the current state of the global attributes, as well as the aggregated status of all nodes and all edges in the system (ref. Step 4) to output updated global attributes (i.e., probabilities of True / False feasibility label in our case) for the current message step.

Additional details of the state-of-the-art formal definition of the GNN block used in the validation of our approach are presented in great length in [Battaglia2018], specifically in Section 3.2. We rely on training and usage of a Graph Network (GN)-block to train the above update functions 21, 22 and 25 and ultimately predict the probabilities of infeasibility / feasibility of the embedding for a given candidate path.

The proposed approach is realized by two main contributions:

### A) Method of training the GNN models

We leverage a heuristic (exemplarily the Genetic Algorithm in our proof-of-concept) to compute candidate schedules for a combination of stream / path candidate / current reservation state as inputs, and subsequently distinguish successful from unsuccessful reservations. Accordingly, we label the candidate configurations as (in)feasible using the global attribute label and feed the candidate configuration (including the stream specification, current state of graph attributes and candidate path) into the training process. The system is correspondingly capable of either:
i) updating / training the model in parallel to normal operation; or
ii) allowing for collection of training inputs and model training in offline manner.

In return, after deducing that a sufficient accuracy has been reached through numerous training and model validation rounds, the model is used to speed-up future evaluations in the network it was trained on, and/or can be used in other deployments due to generalization property of GNNs.

The training process relies on existence of labeled and non-labeled graph structures. The update functions of edge, node and global blocks discussed above are then trained to predict the probabilities for infeasibility / feasibility of embedding given a non-labeled graph as input. The update functions are realized as multi-layer perceptions (MLPs), i.e., multi-layer neural networks. Hence, the models can be updated using standard back-propagation-based algorithms, e.g., the ADAM optimizer.

We extract the following features to describe a particular edge state in both initial and labeled graphs:
1. A Boolean property denoting the port being on the candidate path.
2. An integer property denoting the stream periodicity in nanoseconds (i.e., how frequent are stream frame arrivals expected to be sourced at the Talker);
3. An integer property denoting the hyper-period of streams already embedded on an edge to preferably embed streams with harmonic periods.
4. An integer property denoting the number of stream slots in the schedule cycle requiring occupation by this particular stream, if the stream was to be embedded.
5. A float property denoting the current edge occupation - i.e., occupied stream slots / total available stream slots in the schedule cycle.
6. Optionally, for streams with stringent reliability requirements, a float property denoting the reliability of an edge, to consider the overall reliability of a path.
7. Stream class / priority, or more specifically, the particular queue the stream is mapped to, in order to, for example, account for intra-class interference.

We extract the following features to describe a particular node state in both initial and labeled graphs:
1. A Boolean property denoting the node being declared the role of Talker or Listener for the requested stream embedding
2. A Boolean property denoting the node being on the candidate path
3. An integer property denoting the number of queues available on each port of the node
4. Optionally, for streams with stringent reliability requirements, a float property denoting the reliability of a node, in order to consider the overall reliability of a path.
5. Backplane capacity / occupation, i.e., the internal processing capacity of a node to conclude on the resulting store-and-forward delays and thus avoid the over-utilized nodes.

We then create a labeled instance of the graph above and include the label, i.e., a global feature vector containing:
1. An attribute (i.e., first label to be predicted) denoting if the executed stream embedding was successful / feasible for the evaluated path instance. We set it to 1 if successful, otherwise to 0.
2. An attribute (i.e., second label to be predicted) denoting if the executed stream embedding was unsuccessful / infeasible for the evaluated path instance. We set it to 1 if unsuccessful, otherwise to 0.

Thus, a training sample comprising a labeled and non-labeled graph is collected for each trial of a stream embedding. The collected samples are then used to train the update models individually or in batches.

The loss function used in the training is e.g., in our proof-of-concept realization is the mean squared error. We execute loss computation and back-propagation on each message passing step, so to minimize the number of message-passing iterations required to label the unlabeled graph correctly.

Over time, the model is trained to increase the number of correctly predicted infeasible paths.

### B) Method of execution of the inventive solution.

Same as done for the non-labeled graphs in the training process, graphs are enriched with a set of properties. Nodes that are the talkers or receivers in the TSN stream that is to be configured are assigned Boolean attribute values in their node feature vectors. Similarly, each node and link of the graph that is corresponding to the path that is to be evaluated in the execution step, is assigned a distinguished feature value to differentiate the candidate path nodes from the remainder of graph nodes.

After enriching the current graph state with the updated properties, the inference round takes place where the global feasibility labels are predicted using the models trained prior to execution. Based on the produced feasibility property:
i) the candidate path is either evaluated in the remainder of the scheduling procedure for fitness to host the TSN stream,
ii) the candidate path is skipped for further consideration.

The global update function is used to predict the probability of feasibility labels (true or false) telling the probability of acceptance or rejection for the current evaluated configuration. The output feasibility attributes are thus two float values predicted after a configurable number of message passing iterations.

In order to guarantee propagation of features to all nodes on the path during the message passing steps, in our proof-of-concept, we chose the number of message passing iterations dynamically, i.e., to correspond to the length of the candidate path. This is done in order to accelerate the path validation process. In general, a smaller number of message passing steps may be applicable, but requires additional manual evaluation to deduce practical benefit at minimum loss of accuracy.

The user may optionally configure a 'feasibility threshold', in case of which, if the label probability (True or False) is below the threshold, additional message passing phases may execute for the given path. Alternatively, in case of an insufficiently large label probability, path evaluation can simply be enforced without consideration of probability gap for the two labels.

Although the invention has been explained in relation to its preferred embodiments as mentioned above, it is to be understood that many other possible modifications and variations can be made without departing from the scope of the present invention. It is, therefore, contemplated that the appended claim or claims will cover such modifications and variations that fall within the true scope of the invention.

### BIBLIOGRAPHY

[Battaglia2018] Battaglia et al., "Relational inductive biases, deep learning, and graph networks", https://arxiv.org/abs/1806.01261
[Navet2019] Navet et al., "Using Machine Learning to Speed Up the Design Space Exploration of Ethernet TSN networks", http://158.64.76.181/handle/10993/38604
[RSOliver2018] Oliver et al., "IEEE 802.1 Qbv gate control list synthesis using array theory encoding", https://www.researchgate.net/profile/Silviu Craciunas2/public ation/324476736 IEEE 8021Qbv Gate Control List Synthesis usin g Array Theory Encoding/links/5acf2adbaca2723a3344e191/IEEE-8021Qbv-Gate-Control-List-Synthesis-using-Array-Theory-Encoding.pdf
[Ansah2019] Ansah et al., "Schedulability Analysis and GCL Computation for Time-Sensitive Networks", https://ieeexplore.ieee.org/abstract/document/8971965/
[Hellmanns2020] Hellmanns et al. "Scaling TSN Scheduling for Factory Automation Networks", https://www.researchgate.net/profile/David Hellmanns/publicat ion/340023821 Scaling TSN Scheduling for Factory Automation N etworks/links/5e7349b4299bf1571848cd56/Scaling-TSN-Scheduling-for-Factory-Automation-Networks.pdf
[Pahlevan2018] Pahlevan et al. "Genetic algorithm for scheduling time-triggered traffic in time-sensitive networks", https://networked-embedded.de/paper/pahlevan-etfa-2018.pdf

### LIST OF REFERENCE SIGNS

- 1: transmitter
- 2: bridge
- 3: receiver
- 4: link
- 5: subset of bridges and links
- 6: target stream

- 11: node
- 12: edge
- 13: candidate path

- 100: Training of GNN
- 101: prediction of candidate path

## Claims

1. Computer implemented method for decreasing the configuration search space explored by the schedule computation algorithm of TSN in an industrial network, comprising following steps:
a) providing a Graph Neural Network with the same topology as the industrial network, whereby the nodes (11) of the Graph Neural Network are bridges (2), transmitters (1) and receivers (3) of the industrial network and edges (12) of the Graph Neural Network are links (4) between bridges (2), transmitters (1) and receivers (3), whereby the Graph Neural Network is trained according to pre-defined TSN stream requirements feasible paths through the industrial network, and
b) by the Graph Neural Network predicting a probability of according to the TSN stream requirements feasibility of a candidate path (13) for a target stream (6) embedding on the candidate path (13), according to the TSN stream requirements, whereby the candidate path (13) corresponds to a subset of potential bridges (2) and links (4) in the industrial network.

2. Method according to claim 1, comprising:
c) if the probability is lower than a predetermined threshold, excluding the candidate path (13) from evaluation by the industrial network for the target stream (6), as candidate path (13) is predicted to not fit the requested TSN stream requirements.

3. Method according to claim 1, comprising:
d) rejecting the target stream (8), if the target stream (6) is predicted not to fit on any path through the industrial network.

4. Method according to one of the previous claims,
whereby the Graph Neural Network is trained by samples generated in simulated and non-simulated topologies, with a resulting Graph Neural Network model generalizable to unseen topologies, including multi-ring and meshed networks.

5. Method according to one of the previous claims,
whereby a trainable edge update function takes as input the current state of its edge attributes, the state of aggregated node attributes for nodes (11) incident to this edge (12), and current state of global attributes, updating the edge attributes in each iteration step.

6. Method according to claim 5,
whereby a trainable node update function takes as input the current state of its node attributes, the state of aggregated edge attributes for all edges (12) incident to this node (11), and current state of the global attributes, updating the node attributes in each iteration step.

7. Method according to claim 6,
whereby a trainable node-specific aggregation function aggregates the attributes of edges (12) incident to a node (11) .

8. Method according to claim 7,
whereby a trainable edge and node aggregation function aggregates the current state of all edges' attributes in the graph of the Graph Neural Network, and the current state of all nodes' attributes in the graph, respectively.

9. Method according to claim 8,
whereby a trainable global update function takes as input the current state of the global attributes, and the aggregated state of all nodes (11) and all edges (12) in the graph outputting updated global attributes in each iteration step.

10. Computational device designed to perform a method according to one of the claims 1 to 4.

11. Computational device according to claim 10,
comprising a trainable edge update function, designed and programmed taking as input the current state of its edge attributes, the state of aggregated node attributes for nodes incident to this edge, and current state of global attributes, to update the edge attributes in each iteration step

12. Computational device according to claim 11,
comprising a trainable node update function, designed and programmed taking as input the current state of its node attributes, the state of aggregated edge attributes for all edges incident to this node, and current state of the global attributes, to update the node attributes in each iteration step.

13. Computational device according to claim 12,
comprising a trainable node-specific aggregation function, designed and programmed to aggregate the attributes of edges incident to a node.

14. Computational device according to claim 13,
comprising a trainable edge and node aggregation function, designed and programmed to aggregate the current state of all edges' attributes in the graph of the GNN, and the current state of all nodes' attributes in the graph, respectively, and a trainable global update function, designed and programmed to take as input the current state of the global attributes, and the aggregated state of all nodes and all edges in the graph outputting updated global attributes in each iteration step.

15. A computer program product comprising instructions which, when the program is executed by a computational device, cause the computational device to carry out the steps of the method according to one of the claims 1 to 9.
